# EUROPEAN PATENT SPECIFICATION

(11) **EP 4 612 426 B1**
(45) Date of publication and mention of the grant of the patent: **04.03.2026**
(21) Application number: 24702424.3
(22) Date of filing: 23.01.2024
(51) Int. Cl.: F16K 3/02, F16K 3/36, F16K 27/04

(54) **SLEEVE SEAL LUBRICATION SYSTEM AND METHOD FOR A GATE VALVE**
HÜLSENDICHTUNGSSCHMIERSYSTEM UND VERFAHREN FÜR EIN SCHIEBERVENTIL
SYSTÈME ET PROCÉDÉ DE LUBRIFICATION DE JOINT DE MANCHON POUR ROBINET-VANNE

(30) Priority: 03.02.2023 GB 202301557
(43) Date of publication of application: 10.09.2025
(73) Proprietor: Weir Minerals U.S. Inc., West Valley City, UT 84120 (US)
(72) Inventor: RAO, Vineet, Bengaluru 56009 (IN); BASAVA, Madhukar, Bengaluru 560090 (IN)
(74) Representative: MacLeod, Roderick William
(86) International application number: PCT/IB2024/050629
(87) International publication number: WO 2024/161237

(56) References cited:
- CA-C- 2 131 110
- CN-U- 205 504 049
- US-A- 3 215 157
- US-A- 3 827 673
- US-A1- 2005 001 195
- US-A1- 2010 224 816

## Description

### FIELD OF THE INVENTION

This disclosure relates to industrial valves of the gate valve or knife gate valve type, and specifically relates to a system and method for providing a lubricating substance about the annular members and to the gate as it passes through the annular members of a gate valve.

### BACKGROUND

Gate valves are used in a variety of industries to isolate fluid or media moving through a pipeline system in which the gate valve is installed. Knife gate valves comprise a planar or flat gate having a knife edge at its lower end. The knife gate is movable between a fully open position, where the knife gate is retained in an upper housing, to a fully closed position where the knife gate moves downwardly from the upper housing to between two annular members (or sleeves) that are arranged parallel to each other with adjoining contacting surfaces in compressed condition. When the knife gate is completely positioned between the parallel annular members, the gate obstructs or fully closes the fluid passageway that is formed by the two annular members, and the annular members provide a seal around the gate to prevent the passage of fluid.

It is desirable to lubricate the gate to facilitate easy movement of the gate through the annular members (also called sleeves) because the parallel sleeves are under axial compression to provide pressure-tight registration of the sleeves against the planar surfaces of the gate, thereby preventing media or fluid in the pipeline from infiltrating between the sleeves and the surfaces of the gate. Because of the strong compressive force imposed by the sleeves, friction occurs between the gate and the contact surfaces of the sleeves. Consequently, lubrication of the gate is desirable to reduce the friction.

To that end, conventional knife gate valves are provided with a secondary seal that is positioned in an upper housing of the valve. The secondary seal generally comprises a rectangular slot through which the gate is movable, the slot being lined with one or more elongated seals that are lubricated so that as the gate moves through the slot, lubricant is deposited on the surfaces of the gate to facilitate the movement of the gate between the annular sleeves. In this manner, lubricant is deposited onto the gate surfaces before the gate descends downwardly and between the parallel annular sleeves. As the gate descends, however, the lubricant can become lost or displaced and the gate will not move with frictionless motion between the annular sleeves. Drag on the surfaces of the gate caused by friction forces between the gate and the sleeves prevents efficient functioning of the valve and, in particular, places an undesirable load on the actuator mechanism that moves the gate from the open to closed position. Also, the sleeve life is decreased by unnecessary friction acting on the sleeves.

US 3 827 673 discloses a valve seat construction having a sealing member in a dovetailed groove within a seat ring.

CN 205 504 049 U discloses a valve seat body made of high-temperature-resistant metal and integrated with a gate plate to form a metal hard seal, combined with soft seals and sealing rings.

US 3 215 157 discloses a valve having pressure-actuated seat members with a non-stick insert and an elastomer insert of low modulus of elasticity, along with O-rings, to create a seal at low or no pressure differentials.

### SUMMARY OF THE DISCLOSURE

In a first aspect of the disclosure, there is provided a lubricating annular member as set forth in claim 1.

The channel positioned between the inward-facing axial surface and the outward-facing axial surface may be referred to as a lubrication storage channel.

One particular advantage of the lubricating annular member is to provide a lubricating substance to and about several points of the gate as the gate moves back and forth in the valve body between open and closed positions.

In certain embodiments, the annular channel is an open channel formed in the outward-facing axial surface of the annular member.

In some embodiments, the lubricating annular member further comprises at least one radial channel having an opening formed at the annular channel, the at least one radial channel being in fluid communication with the at least one axial channel to provide lubrication between the annular channel and the at least one axial channel.

In yet other embodiments, the lubricating annular member further comprises at least one radial channel formed with an opening at the outward-facing axial surface of the annular member and extending to the annular channel, and being in fluid communication with the annular channel to introduce a lubricating substance to the annular channel.

In certain embodiments, the at least one axial lubrication channel comprises a plurality of axial lubrication channels distributed about the second surface of the annular member.

In certain other embodiments, the plurality of axial lubrication channels is from two to twenty-four in number.

In yet other embodiments, the plurality of axial lubrication channels is from four to twenty in number.

In still other embodiments, the plurality of axial lubrication channels is from one to twenty-four in number.

In some embodiments, the at least one axial lubrication channel has a diameter of between 0.2 millimetres and 15 millimetres.

In certain embodiments, the lubricating annular member further comprises a reinforcing member located at, or radially outwards of, the at least one axial lubrication channel.

In some embodiments, a reinforcing member is located around each of a plurality of axial lubrication channels provided in the lubricating annular member.

In yet other embodiments, the lubricating annular member further includes a load distribution ring positioned within the annular member and located proximate the first side of the annular member.

In a second aspect of the disclosure, there is provided a gate valve as set forth in claim 9.

In certain embodiments, the gate valve further includes at least one radial lubrication channel in fluid communication with the annular lubrication channel of each of said pair of lubricating annular members.

In some embodiments, the at least one radial lubrication channel comprises a plurality of radial lubrication channels positioned about an outer circumferential surface of each of said pair of lubricating annular members, the plurality of radial lubrication channels being accessible externally to the valve body through said valve body port(s).

In certain embodiments, each of the at least one radial lubrication channels has an opening in communication with the annular channel of a respective first of the pair of lubricating annular members and second of the pair of lubricating annular members, and each radial lubrication channel has an opening to an axial lubrication channel.

In still other embodiments, the gate valve further includes a delivery device for delivering a lubricating substance to each of said plurality of radial lubrication channels through said valve body port.

In yet other embodiments, the at least one axial lubrication channel comprises a plurality of axial lubrication channels positioned about an annulus of the first of the pair of lubricating annular members and about an annulus of the second of the pair of lubricating annular members.

In other embodiments, the plurality of axial lubrication channels each have an opening located in an annular bevelled surface of the first of the pair of lubricating annular members and the second of the pair of lubricating annular members, the annular bevelled surface being positioned to surround the respective contact surfaces of the first and second of the pair of lubricating annular members.

In some embodiments, the gate valve further includes a reinforcement device located in proximity to each of the plurality of axial lubrication channels.

In certain embodiments, the gate valve further comprises a load distribution ring positioned within or adjacent to each of said first and said second of the pair of lubricating annular members proximate an outer annular surface of each sealing annular member to which a pipe may be coupled.

In some embodiments, the gate valve further includes a secondary seal arrangement positioned in an upper portion of the valve body.

In certain embodiments, the first housing side and second housing side of the valve body are unitary formed.

In certain other embodiments, the first housing side and second housing side of the valve body are separable structures and are fastened together.

In a third aspect of the disclosure, there is provided a method of lubricating the gate valve of the second aspect as set forth in claim 12.

In other embodiments, the method further comprises providing each of the pair of lubricating annular members with at least one radial lubrication channel in fluid communication with the lubrication channel of the pair of lubricating annular members, and providing a lubricating substance to the annular channel of each of the pair of lubricating annular members via the at least one radial lubrication channel.

In yet other embodiments, each of the pair of lubricating annular members is provided with a plurality of radial lubrication channels positioned about the respective pair of lubricating annular members to provide a lubricating substance to the lubrication channel with which the radial lubrication channels are in communication to deliver a lubricating substance evenly about and to the lubrication channel.

In some embodiments, each of the pair of lubricating annular members is provided with at least one radial lubrication channel in fluid communication with the lubrication channel of the respective pair of lubricating annular members, and are positioned to provide a lubricating substance from the lubrication channel to the at least one axial lubrication channels of each of the pair of lubricating annular members.

In certain embodiments, the lubricating substance is grease or a semi-solid liquid.

These aspects and other details of the disclosure are described more fully below, in reference to the several drawing figures.

In some embodiments of this aspect, each of the pair of lubricating annular members is formed with an annular bevelled surface positioned adjacent the contact surface of each of the pair of lubricating annular members, and the at least one axial lubrication channel has an opening extending through the annular bevelled surface of each of the pair of lubricating annular members to deliver a lubricating substance to the annular bevelled surface of each of the pair of lubricating annular members and to the gate as it moves between the abutting contact surfaces of the pair of lubricating annular members.

In certain embodiments, each of the pair of lubricating annular members has a plurality of axial lubrication channels positioned about an annulus of the pair of lubricating annular members proximate the contact surfaces to deliver a lubricating substance from about the annulus of each of the pair of lubricating annular members.

In other embodiments, the method further comprises providing each of the pair of lubricating annular members with at least one radial lubrication channel in fluid communication with the lubrication channel of the pair of lubricating annular members, and providing a lubricating substance to the annular channel of each of the pair of lubricating annular members via the at least one radial lubrication channel.

In yet other embodiments, each of the pair of lubricating annular members is provided with a plurality of radial lubrication channels positioned about the respective pair of lubricating annular members to provide a lubricating substance to the lubrication channel with which the radial lubrication channels are in communication to deliver a lubricating substance evenly about and to the lubrication channel.

In some embodiments, each of the pair of lubricating annular members is provided with at least one radial lubrication channel in fluid communication with the lubrication channel of the respective pair of lubricating annular members, and are positioned to provide a lubricating substance from the lubrication channel to the at least one axial lubrication channels of each of the pair of lubricating annular members.

In certain embodiments, the lubricating substance is grease or a semi-solid liquid.

These aspects and other details of the disclosure are described more fully below, in reference to the several drawing figures.

### BRIEF DESCRIPTION OF THE SEVERAL VIEWS OF THE DRAWINGS

FIG. 1 a perspective view in cross section of a gate valve in accordance with an embodiment of the disclosure;
FIG. 2 is a view in cross section of a portion of the gate valve shown in FIG. 1;
FIG. 3 is a partial view in cross section of a lubricating annular member in accordance with an embodiment of the disclosure;
FIG. 4 is a perspective view of a cross section of a lubricating annular member, shown from a first side thereof;
FIG. 5 is a perspective view of a cross section of a lubricating annular member, shown from a second side thereof;
FIG. 6 is a perspective view of a valve body, where a given thickness of an annular segment of an annular member is removed to better illustrate the position of a plurality of radial lubricating channels;
FIG. 7 is an enlarged view of a portion of the figure depicted in FIG. 6;
FIGS. 8A through 8C depict lubricating annular members of various sizes suitable for use in knife gate valves of various sizes;
FIG. 9 is a perspective view of an alternative embodiment of the gate valve in accordance with the disclosure;
FIG. 10 is a perspective view in vertical cross section of the gate valve embodiment shown in FIG. 9;
FIG. 11 is an enlarged perspective view of the vertical cross section of FIG. 10 showing the lubricating annular member of the embodiment;
FIG. 12 is a perspective view in radial cross section of a first annular member of the embodiment of FIG. 9;
FIG. 13 is a perspective view in radial cross section of a second annular member of the embodiment of FIG. 9;
FIG. 14 is a view in elevation of a portion of the first annular member and second annular member in side-by-side proximity;
FIG. 15 is a perspective view of the first annular member;
FIG. 16 is a perspective view of the second annular member;
FIG. 17 is a perspective view of another alternative embodiment of the gate valve in accordance with the disclosure;
FIG. 18 is a perspective view in vertical cross section of the alternative gate valve embodiment shown in FIG. 17;
FIG. 19 is an enlarged perspective view of the vertical cross section of FIG. 18 showing the lubricating annular member of the FIG. 17 embodiment;
FIG. 20 is a perspective view in radial cross section of a first annular member of the FIG. 17 embodiment;
FIG. 21 is a perspective view in radial cross section of a second annular member of the FIG. 17 embodiment;
FIG. 22 is a view in elevation of a portion of the first annular member and second annular member of the FIG. 17 embodiment in side-by-side proximity;
FIG. 23 is a perspective view of the first annular member of the FIG. 17 embodiment; and
FIG. 24 is a perspective view of the second annular member of the FIG. 17 embodiment;
FIG. 25 is a partial view in cross section of a lubricating annular member (similar to that shown in FIG. 3) in accordance with an alternative embodiment of the disclosure similar to the FIGS. 1 to 8 embodiment; and
FIG. 26 is a view in elevation of a portion of the first annular member and second annular member in an alternative embodiment to that of the FIGS. 9 to 14 embodiment, in side-by-side proximity (similar to that shown in FIG. 14).

### DETAILED DESCRIPTION OF THE ILLUSTRATED EMBODIMENTS

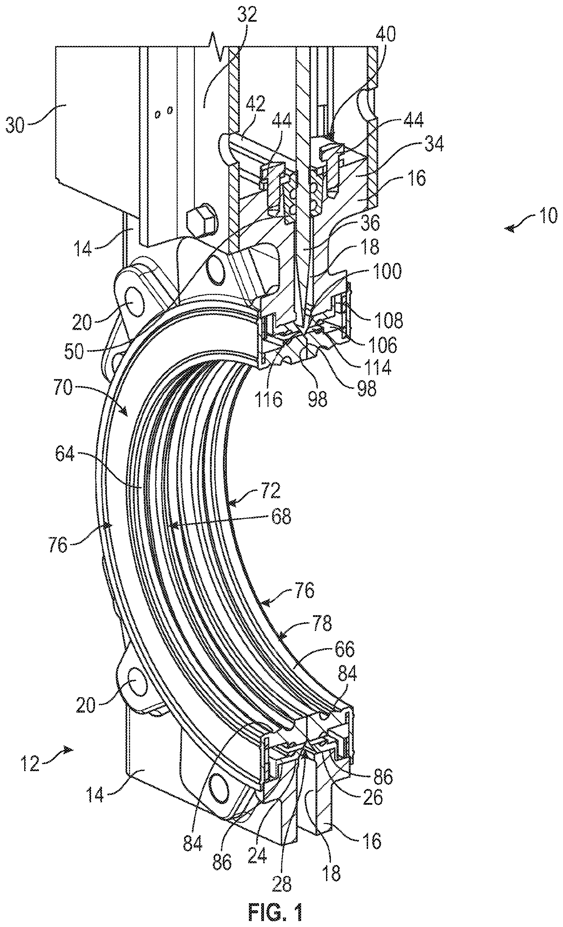

FIG. 1 depicts one type of a gate valve 10 in accordance with one aspect of the disclosure. The gate valve 10 generally includes a valve body 12 comprised of a first housing side 14 and a second housing side 16 that are positioned in parallel opposed alignment with each other and configured to be spaced apart from each other to provide a space 18 therebetween.

The first housing side 14 and second housing side 16 in the embodiment of FIG. 1 are peripherally formed as a unitary valve body 12. In other embodiments described hereinbelow, the first housing side 14 and second housing side 16 may be separate structures which are fastened together about their periphery to form a two-piece, or split body, valve body type. In the embodiment of FIG. 1, flange mounting holes 20 may be provided to attach the valve body 12 to auxiliary pipes in a known fashion.

Each of the first housing side 14 and second housing side 16 has an inner circumferential surface 24, 26 that defines an interior central opening 28 through the valve body 12. A gate guard 30 and a yoke 32 may be secured to the valve body 12 at an upper portion 34 thereof. The gate guard 30 provides a full or partial enclosure for receiving the gate 36 of the gate valve 10 when the gate valve 10 is in an open position, i.e., when the gate 36 is positioned and retained within the gate guard 30 as shown. The movement of the gate 36 is achieved by an actuator (not shown) which is connected to the gate 36 and is manually or electronically operated in known fashion to raise and lower the gate 36 during operation of the gate valve 10.

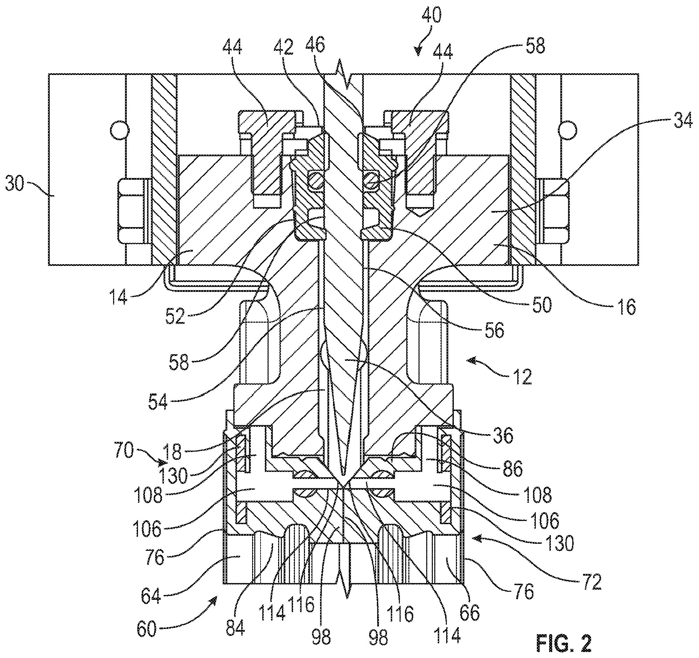

A secondary seal arrangement 40 may be provided and positioned between the first housing side 14 and second housing side 16 at the upper portion 34 of the valve body 12. As best seen in FIG. 2, the secondary seal arrangement 40 comprises a slot housing 42 that is secured to the respective first housing side 14 and second housing side 16 by bolts 44. The slot housing 42 provides a slot 46 that is sized to receive the gate 36 in sliding movement therethrough. A secondary seal element 50 is positioned in a space 52 between the first housing side 14 and second housing side 16, and is positioned to contact the outer surfaces 54, 56 of the gate 36. Lubricating material may be provided within elongated grooves 58 formed in the secondary seal element 50 to deliver a secondary lubricating material to the surfaces 54, 56 of the gate 36 as the gate 36 slidingly moves through the slot 46. The secondary seal element 50 also operates to remove fluids from the surfaces 54, 56 of the gate 36 when the gate 36 moves upwardly from being in the closed position and downwardly from being in the open position.

A lubricating sealing arrangement 60, in accordance with the disclosure, is provided as part of the gate valve 10. The lubricating sealing arrangement 60, in general, comprises a first annular member body 64 (which acts as a sealing sleeve) positioned against the inner circumferential surface 24 of the first housing side 14 and a second annular member body 66 (which acts as a complementary sealing sleeve) positioned against the inner circumferential surface 26 of the second housing side 16 so that the lubricating sealing arrangement 60 registers within the interior central opening 28 of the valve body 12. The first sealing sleeve 64 and second sealing sleeve 66 are both annular (e.g., circular or elliptical) bodies that together define a fluid passageway (or pathway) 68 through which media flows when the gate 36 is in the open position. The first sealing sleeve (annular member body) 64 and second sealing sleeve (annular member body) 66 may be made of an elastomeric material.

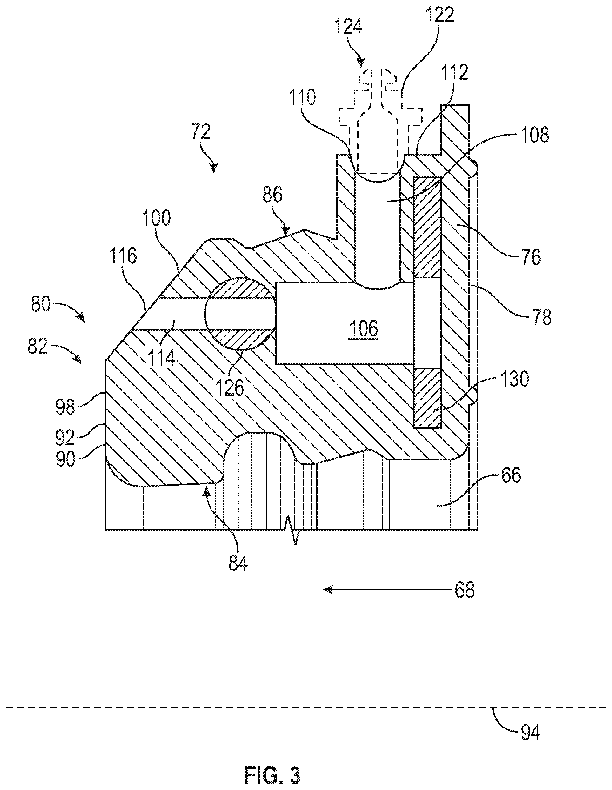

Referring to FIGS. 3, 4 and 5, each of the first annular member body 64 and second annular member body 66 is configured to provide a lubricating sealing element to deliver a lubricating substance to the gate 36 as it moves through the gate valve 10.

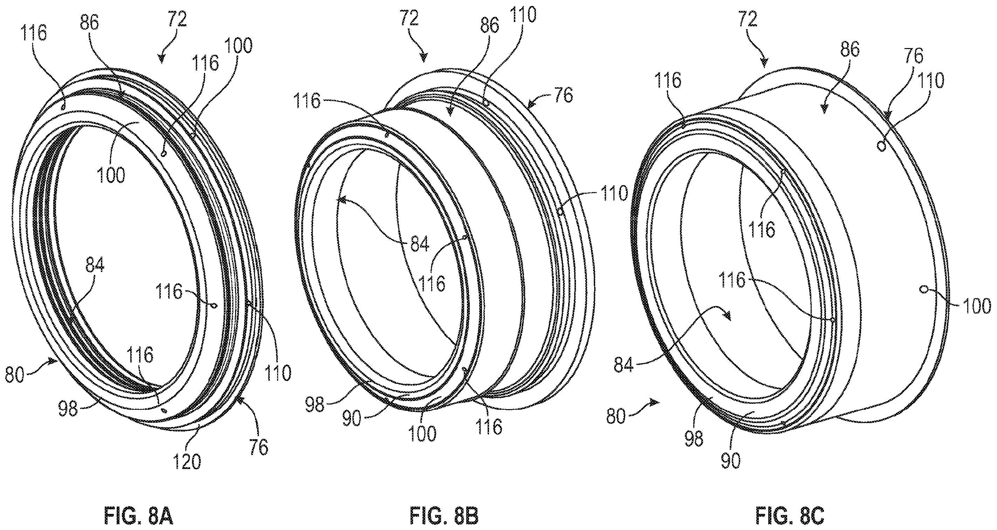

Each of the first annular member body 64 and second annular member body 66 are configured (e.g. with additional reinforcement or load distribution components) as an annular member 70, 72. Although FIG. 1 only shows one half of the annular member 70, 72, it is understood that each annular member 70, 72 embodies a full circle or ringed construct, as depicted in FIGS. 8A-8C. Each of the first annular member body 64 and second annular member body 66 has a first side 76 that provides a first surface 78 oriented for coupling against a pipe flange (not shown) of a pipeline, in known fashion. Each of the first annular member body 64 and second annular member body 66 also has a second side 80 spaced apart from and in opposition to the first side 76. The second side 80 of each annular member 70, 72 provides a second surface 82 that is oriented for intermittent contact with the gate 36 as the gate 36 moves between an open position and a closed position.

Each of the first annular member body 64 and second annular member body 66 is also configured with an inward-facing axial surface 84 that extends between the first side 76 and the second side 80 of the annular member 70, 72. The inward-facing axial surface 84 of each annular member 70, 72, in combination, defines the fluid passageway 68 through the gate valve 10.

Each of the first annular member body 64 and second annular member body 66 has an outward-facing axial surface 86 extending between the first side 76 and the second side 80 of the annular member 70, 72, the outward-facing axial surface 86 being radially spaced from and oriented in a direction away from the inward-facing axial surface 84. The outward-facing axial surface 86 of each of the annular members 70, 72 is positioned to register against (and provide a support surface for) the respective inner circumferential surface 24, 26 of the first housing side 14 and second housing side 16.

The second side 80 of each annular member 70, 72 may be configured with a radially extending portion 90, radial, or perpendicularly oriented, relative to a longitudinal axis 94 formed through the centre of the fluid passageway 68. The radially extending portion 90 defines an annulus 92 of each annular member 70, 72, and defines a contact surface 98 that is oriented toward and abuts the contact surface 98 of the adjacent annular member 70, 72 as shown in FIGS. 1 and 2.

The second side 80 may also be configured with an annular bevelled portion 100 that extends between the radially extending portion 90 of the second side 80 to the outward-facing axial surface 86 of the annular member 70, 72.

Referring again to FIGS. 3, 4 and 5, the lubricating sealing element, or annular members 70, 72 comprising the first annular member body 64 and second annular member body 66, are each configured with a lubrication channel 106 that is formed within the annular member 70, 72 between the inward-facing axial surface 84 and the outward-facing axial surface 86. The lubrication channel 106 may be a continuous channel that defines a full circular pathway within the annular member 70, 72. Alternatively, the lubrication channel 106 may comprise a series of discontinuous or blind channel sections that are distributed within the annular member 70, 72, each section of the lubrication channel 106 being provided with a source of lubricating substance in the manner to be described. The lubrication channel 106 may have a circular or elliptical cross-section (or other convenient cross-section) in a plane transverse to the fluid passageway 68.

The lubrication channel 106 may be referred to as a lubrication storage channel.

Each annular member 70, 72 is further structured with at least one radial channel 108 having an opening 110 formed through the outward-facing axial surface 86 or, more specifically, through an outer circumferential surface 112 of the annular member 70, 72 positioned at or near the outward-facing axial surface 86. The outer circumferential surface 112 is located in registration with the valve body 12 first housing side 14 or second housing side 16 to provide ready access to the opening 110 of the radial channel 108, as described further hereinafter. Each of the at least one radial channel 108 extends radially inwardly toward the lubrication channel 106 to be in fluid communication with the lubrication channel 106 for delivery of a lubricating substance into and through the radial channel 108 and then into the lubrication channel 106.

As used herein, the phrase "fluid communication" is meant to imply that there is a communication of pathways the allows for the flow of a substance along the pathways, but is not meant to imply or be limited to the flow of a liquid substance. Rather, the use of the phrase herein is meant to imply the flow of any suitable lubricant material, including flowable fluids, semi-solid materials, viscous lubricating substances and the like.

As used herein, the phrase "at or near" is meant to imply that a recited structure may be positioned at or connected to another recited structure, or may be located or positioned at a spaced-apart, but closely located, point relative to another recited structure.

Each annular member 70, 72 is further structured with at least one axial lubrication channel 114 that extends from the lubrication channel 106 to an opening 116 formed in the second side 80 of the annular member 70, 72. Each of the at least one axial lubrication channel 114 is in fluid communication with the lubrication channel 106 to receive a lubricating substance from the lubrication channel 106.

The opening 116 of each axial lubrication channel 114 is positioned to provide a lubricating substance to the area of the second side 80 of the annular member 70, 72. In some embodiments, the opening 116 may be positioned in or near the radially extending portion 90, or annulus 92, of the annular member 70, 72. In the embodiment of FIGS. 1-4, the opening 116 is formed in the annular bevelled portion 100 of the second side 80. As can best be appreciated from FIG. 2, positioning of the opening 116 at the annular bevelled portion 100 of the second side 80 of the annular members 70, 72 effectively delivers a lubricating substance to the outer surfaces 54, 56 of the gate 36 as it passes between the abutting contact surfaces 98 of the adjacent first annular member body 64 and second annular member body 66, and then through the fluid passageway 68 to close the fluid passageway 68 from the flow of working fluid or media therethrough.

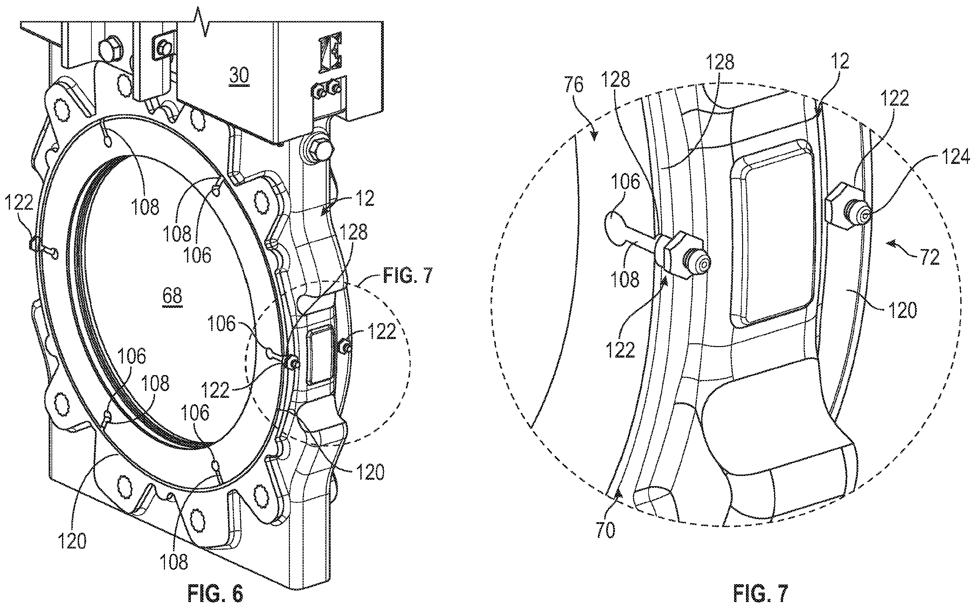

The at least one radial lubrication channel 108, in a particularly suitable embodiment of the disclosure, comprises a plurality of radial lubrication channels 108 that are distributed about the outer circumference of the annular member 70, 72, or about the outer circumferential surface 112. Such an arrangement is shown in FIGS. 6 and 7 where a plurality of radial lubrication channels 108 are distributed about the outer circumference 120 of the annular member 70, it being noted that a planar portion of the thickness of the first side 76 of the annular member 70 has been removed in FIGS. 6 and 7 to better illustrate the position of the radial lubrication channels 108. It is to be understood that the radial lubrication channels 108 are fully embedded within the annular member 70, 72 as shown in FIGS. 3, 4 and 5.

A delivery device 122 may be associated with one or more radial lubrication channels 108 to provide means for inserting a lubricating substance into the lubricating sealing arrangement or into each radial channel 108. By way of example only, a nipple device 124, as shown in FIGS. 6 and 7, may serve as a delivery device, the nipple 124 being sized for insertion into the opening 110 of the radial lubrication channel 108, as suggested in FIG. 3 in phantom line. Specifically, the delivery device, or nipple device 124, is inserted into a valve body port 128 formed through the first housing side 14 or second housing side 16, and as each valve port 128 is in alignment with a radial channel 108, the delivery device provides access for delivery of a lubricating substance to the lubricating sealing arrangement from a point external to the valve body 12.

A plurality of delivery devices 122 may be provided with a lubricating substance, such as a suitable grease, oil material or suitable semi-solid lubricant, by means of a manifold supply system (not shown). Such a manifold supply system may be operated manually or mechanically through an automated system. The lubricating substance is provided under pressure to the delivery devices 122 and to the lubricating channels within the annular members 70, 72 to assure consistent delivery to the gate 36 and contact surfaces 98.

The at least one axial lubrication channel 114 may, in a particularly suitable embodiment, comprise a plurality of axial lubrication channels 114 distributed about the annular member 70, 72 to deliver lubricating fluid to several points roundabout the annular bevelled portion 100. This arrangement has a particularly advantageous benefit of delivering lubricating material to the gate 36 and the annular bevelled portion 100 on a comparatively continuous basis as the gate 36 moves upwardly and downwardly between the abutting contact surfaces 98 of the annular members 70, 72, thereby assuring that lubricating material is contacting the gate 36 and the first annular member body 64 and second annular member body 66 through the movement of the gate 36 to assure continuous frictionless movement. To that end, the axial lubrication channels 114 formed in each annular member 70, 72 may number from two to twenty-four in number, or any suitable number therebetween. Each axial lubrication channel 114 may also have a diameter ranging from 0.2 millimetres to fifteen millimetres or more, depending on the number and distribution of the axial lubrication channels 114, and on the size of the annular members 70, 72.

The annular members 70, 72 may also be provided with one or more reinforcing members 126 located near or about the axial lubrication channels 114 to support and retain the axial lubrication channels 114 during axial compression of the first annular member body 64 and second annular member body 66 against each other by attachment of each to the flange of a coupled pipe of a pipeline. The reinforcing members 126 may be provided in any number and/or take any variety of forms, but are illustrated in FIGS, 3, 4, and 5 as being a metal sphere or ring positioned to surround the axial lubrication channel 114.

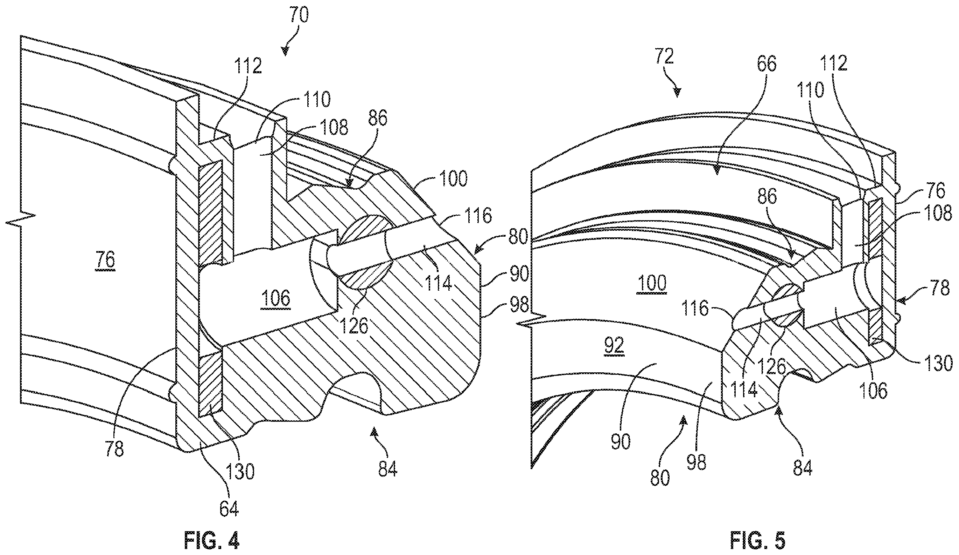

Each annular member 70, 72 may also be structured with a load distribution ring 130 which is located in proximity to the first side 76 of the annular member 70, 72 to stabilize the annular member 70, 72 under compressive forces imposed by attachment of the gate valve 10 to the pipe flange of a pipe. The channel 106 may, in one embodiment, be structured to bottom out within the load distribution ring 130 as shown in FIGS. 4 and 5.

The first annular member body 64 and the second annular member body 66, may be formed by a moulding method to provide the radial channels, annular lubrication channel and axial lubrication channels that are formed within the body of the annular members 70, 72. Alternatively or additionally, some of the lubricating channels, such as the axial lubrication channels and radial channels, may be formed in the annular member 70, 72 by machining processes.

FIGS. 8A through 8C illustrate various sizes of annular member bodies or sealing sleeves that may be used in the lubricating sealing arrangements described herein, for use in varying sizes or types of gate valves.

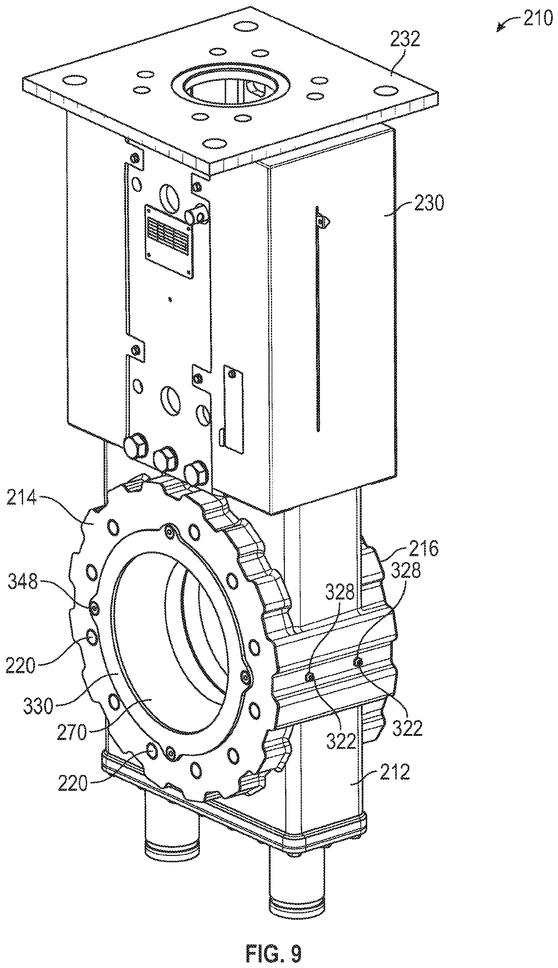

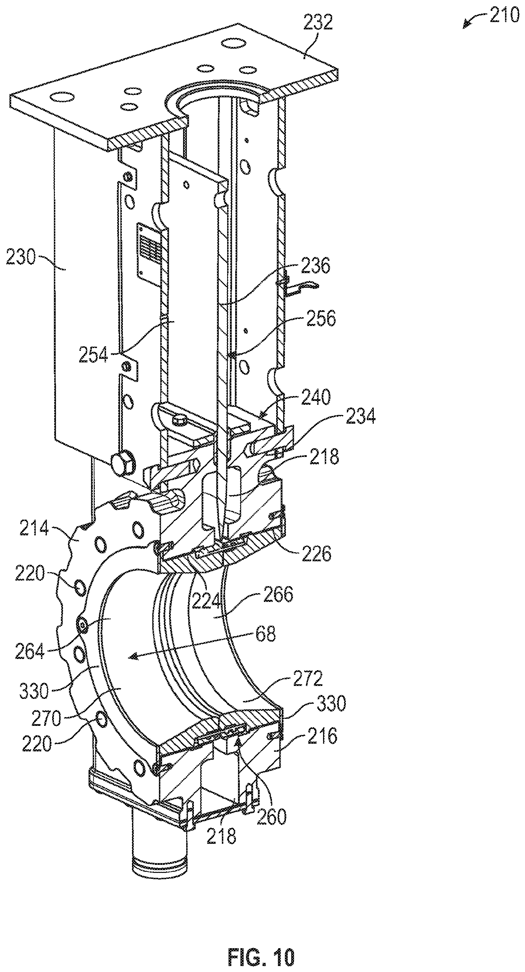

FIGS. 9-16 illustrate an alternative embodiment of a gate valve 210 and lubricating sealing arrangement 260 in accordance with the disclosure. Like the embodiment depicted in FIGS. 1-8, the embodiment of FIGS. 9-16 comprises a valve body 212 that is of unitary formation where the first housing side 214 and second housing side 214 are unitarily formed. A space 218 is formed between the first housing side 214 and second housing side 216 to accommodate the movement of the gate 236 between an open position, as illustrated in FIG. 10, and a closed position. A gate guard 230 is located above the valve body 212 to surround the gate 236 and a yoke is also attached to the upper portion 234 of the valve body 212. A secondary seal arrangement 240 may be located at the upper portion 234 of the valve body 212, as previously described. The first housing side 214 and second housing side 216 are each formed with openings 220 for attachment of the valve body 212 to the flange of a pipe (not shown) in known fashion.

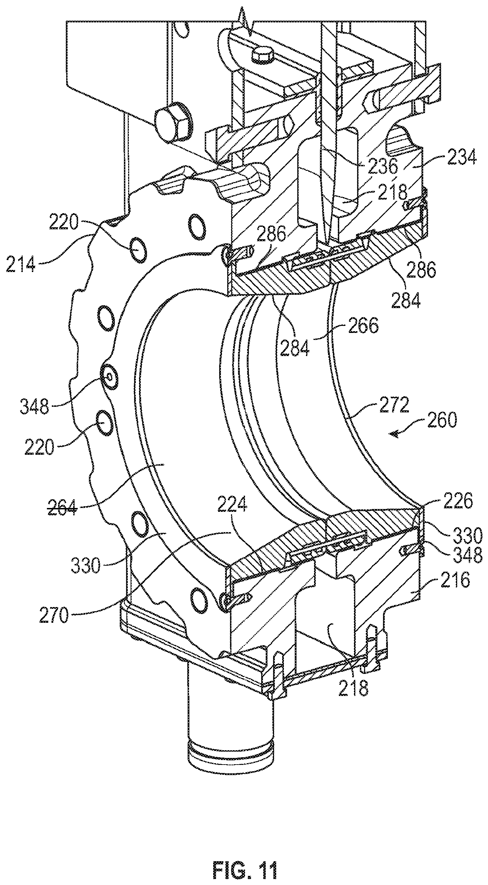

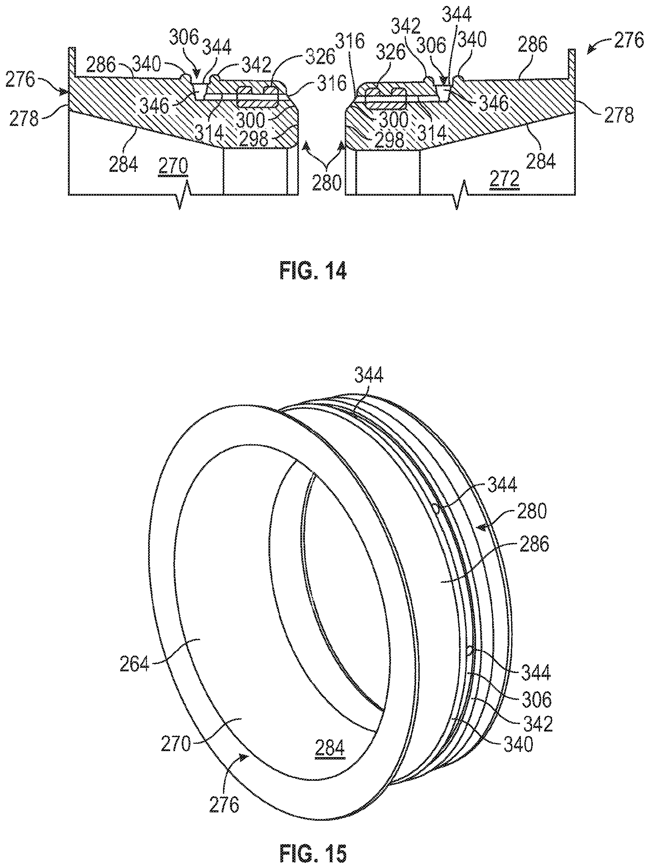

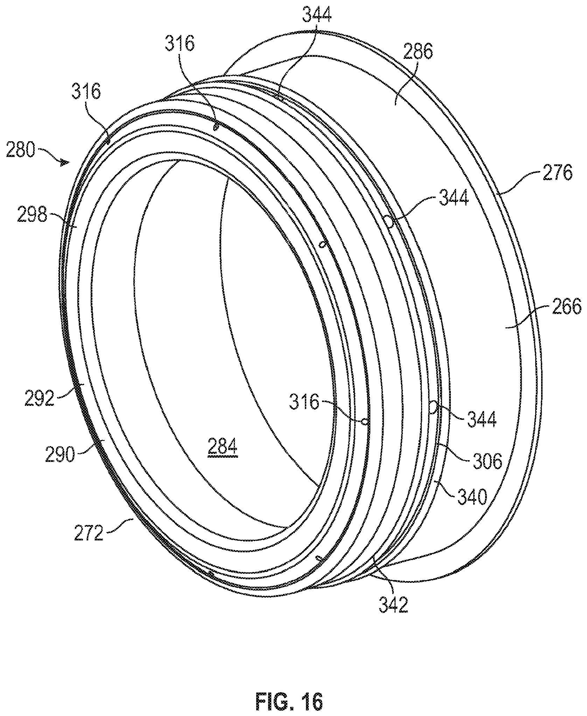

The lubricating sealing arrangement 260 of this embodiment includes a first annular member body 264 and a second annular member body 266 which, together, provide a fluid passageway for movement of a working fluid therethrough. Each of the first annular member body 264 and second annular member body 266 is formed as an annular member 270, 272, as best shown in FIGS. 15 and 16. The first annular member body 264 is positioned in registration with the inner circumferential surface 224 of the first housing side 214, and the second annular member body 266 is positioned in registration with the inner circumferential surface 226 of the second housing side 216, as seen in FIGS. 10 and 11.

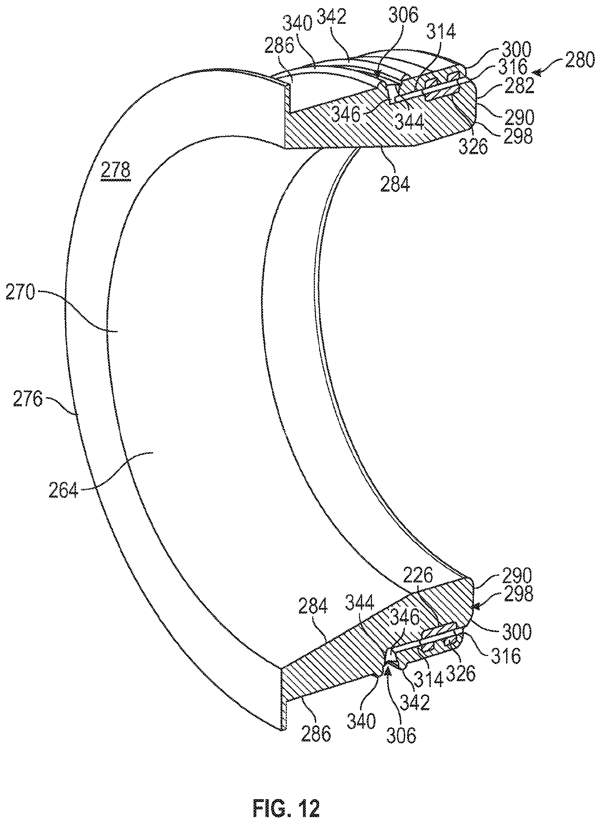

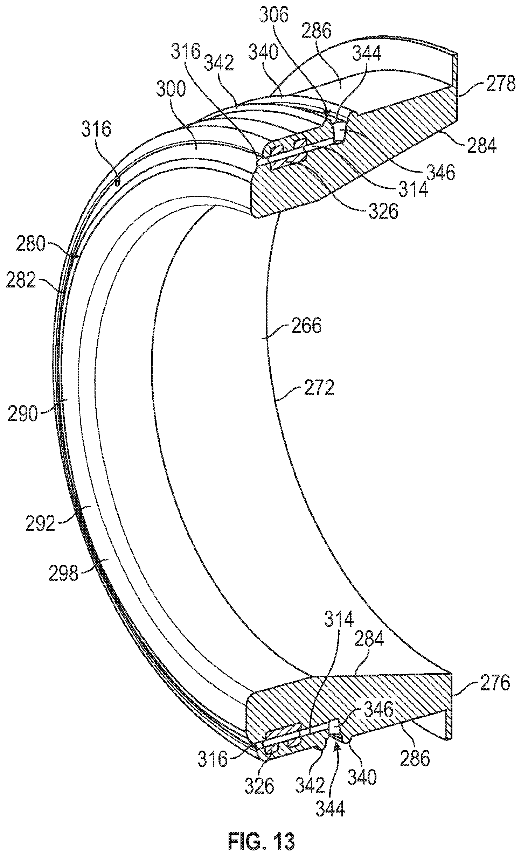

As best seen in FIGS. 12 and 13, which, respectively, depict cross sections of the first annular member body 264 and second annular member body 266, each has an annular first side 276 that provides a first surface 278 oriented toward a point for attaching the valve body 212 to a pipe flange (not shown), and each has a second side 280 which has a second surface 282 that is oriented for intermittent contact with outer surfaces 254, 256 of the gate 236. Each annular member 270, 272 has an inwardly-facing axial surface 284 that extends between the first surface 278 and the second surface 282, and each annular member 270, 272 has an outward-facing surface 286 that extends between the first surface 278 and the second surface 282.

The second side 280 of each annular member 270, 272 may be configured with a radially extending portion 290 which defines an annulus 292 of each annular member 270, 272, which in turn defines a contact surface 298 of each annular member 270, 272. The contact surfaces 298 of the adjacently-positioned annular members 270, 272 abut each other and are compressed together in use. The second side 280 of each annular member 270, 272 may also be formed with a bevelled portion 300.

In the alternative embodiment of FIGS. 9-16, each annular member 270, 272 is configured with an annular channel 306 that is formed in the outward-facing surface 286 of each annular member 270, 272. The annular channel 306 may be referred to as a lubrication storage channel.

The annular channel 306 comprises an open channel extending along the outward-facing surface 286, annular channel being defined between parallel, spaced-apart annular ribs 340, 342 that extend outwardly from the outward-facing surface 286. The annular channel 306 may be a continuous open channel that fully encircles the circumference of the outward-facing surface 286 or, alternatively, may comprise multiple open channels separately formed and positioned about the circumference of the outward-facing surface 286.

At least one opening 344 is formed in the annular channel 306, which leads to a radial channel or inlet 346 that extends inwardly from the outwardly-facing surface 286. The radial channel or inlet 346 is in fluid communication with an axial lubrication channel 314 that extends axially from the radial channel or inlet 346 to an opening 316 of the axial lubrication channel 314 that is positioned at the second side 280 of the annular member 270, 272. In the embodiment shown, the opening 316 is at the annular bevelled portion 300 of the second side 280. However, the axial lubrication channel 314 may be located such that the opening 316 is formed at the annulus 292 or contact surface 298 of the second side 280. One or more reinforcement members 326 may be located in proximity to the axial lubrication channel 314 as previously described.

As seen in FIGS. 15 and 16, which depict the outward-facing axial surface 286 of the annular members 270, 272, a plurality of openings 344 may be provided in the annular channel 306. As can be appreciated with reference to FIG. 9, when the first annular member body 264 and second annular member body 266 are positioned within the valve body 212, the openings 344 in the annular members 270, 272 may be situated to align with valve body ports 328 that are formed through the periphery of the respective first housing side 214 and second housing side 216. The valve body ports 328 may be fitted with lubricant delivery devices 322 that provide for insertion of a lubricating substance through the valve body ports 328, which directs the lubricant into the annular channel 306 and then to the radial lubrication channels or inlets 346, which then direct the lubricant to the axial lubrication channel 314 and then to the second side 280 of the annular members 270, 272. Notably, the annular members 270, 272 do not need to be positioned within the valve body 212 to strictly align the openings 344 in the annular members 270, 272 with the valve body ports 228 since the valve body ports 228 are in fluid communication with the annular channel 306, which in turn leads to the radial channels or inlets 346.

A shown in FIGS. 9 and 10, a load distribution ring 330 may be provided to stabilize the annular members 270, 272, but, in this embodiment, the load distribution ring 330 is positioned in registration with the annular first surface 278 of the first side 276 of each annular member 270, 272 and is fastened to the first housing side 214 and second housing side 216 by fasteners 348, such as screws.

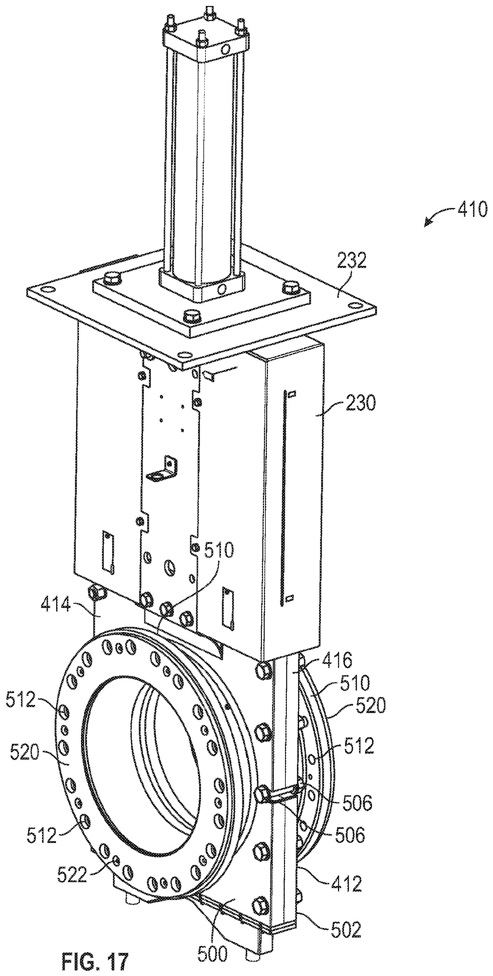

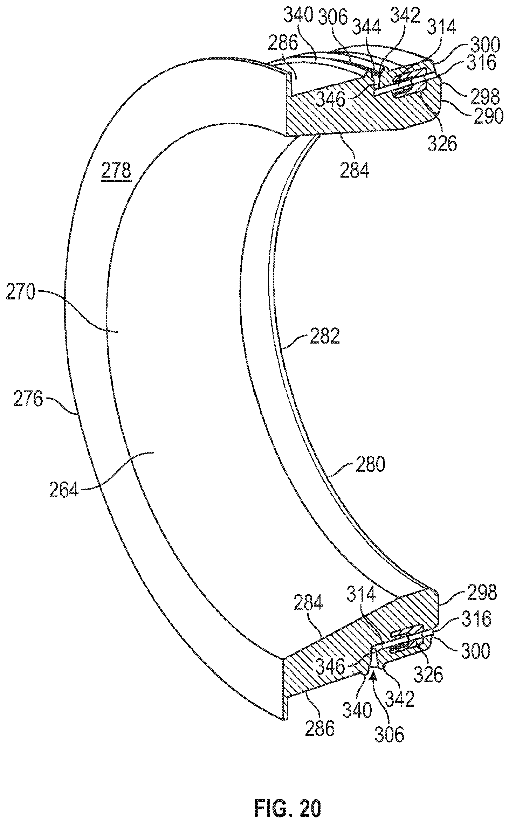

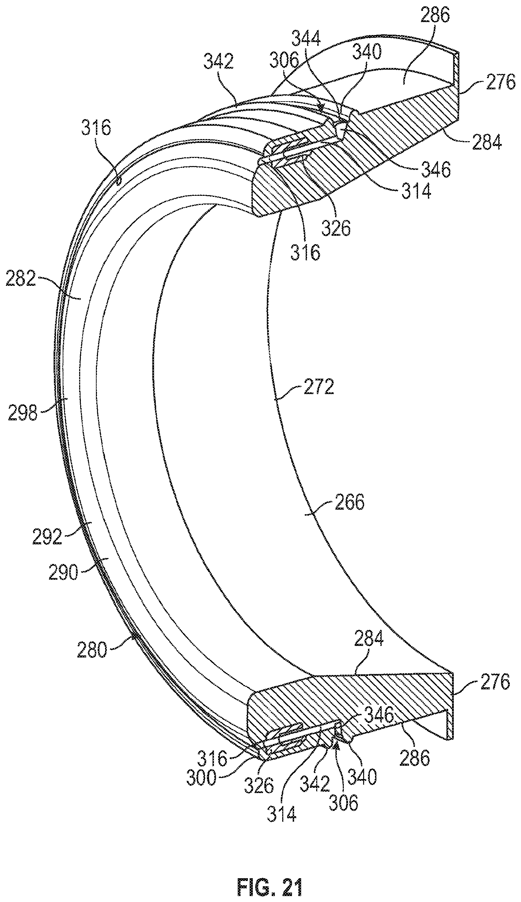

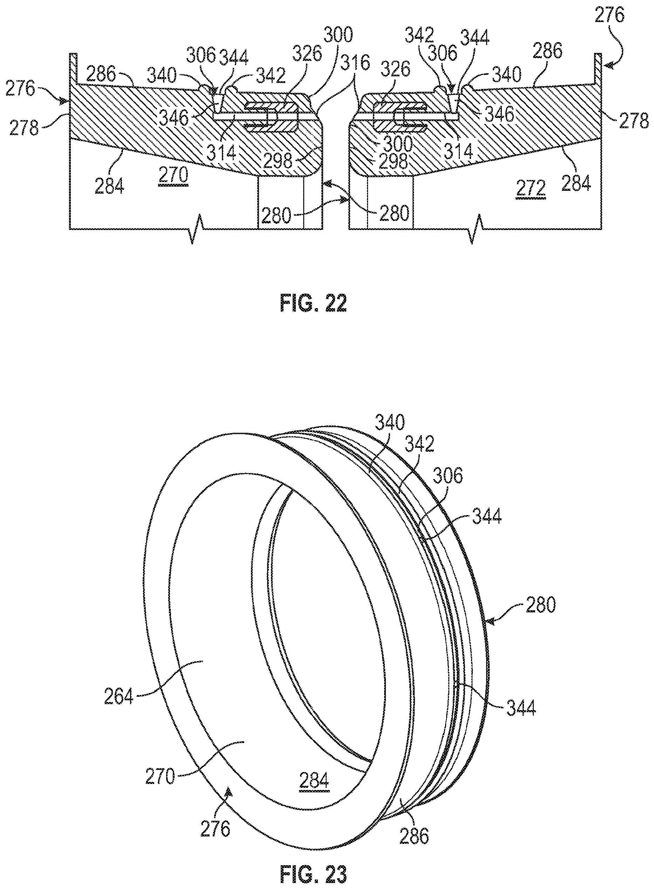

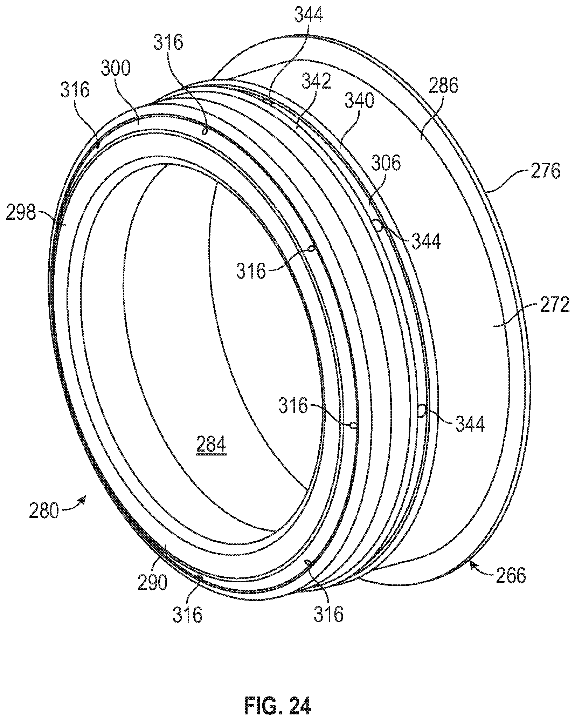

FIGS. 17-24 illustrate a further alternative embodiment of the gate valve 410 and lubricating sealing arrangement 260, where structures similar to those identified in the embodiment of FIGS. 9-16 are identified by the same reference numerals. The alternative embodiment shown in FIGS. 17-24 comprises a gate guard 230 and associated yoke 232 which are attached at an upper portion 234 of the valve body 412. In this embodiment, however, the valve body 412 comprises a first housing side 414 and a second housing side 416 which are separate and separable structures. The first housing side 414 and second housing side 416 are adjacently aligned and are secured together about their respective peripheries 500, 502 by fasteners 506, such as bolts.

As seen in FIGS. 17-19, each of the first housing side 414 and second housing side 416 are formed with a radially extending flange 510 positioned to register against a pipe flange (not shown) for coupling thereto. The radial flanges 510 are provided with openings 512 for insertion of fastening devices, such as bolts, to secure the radial flanges 510 to the flange of a pipe in known fashion.

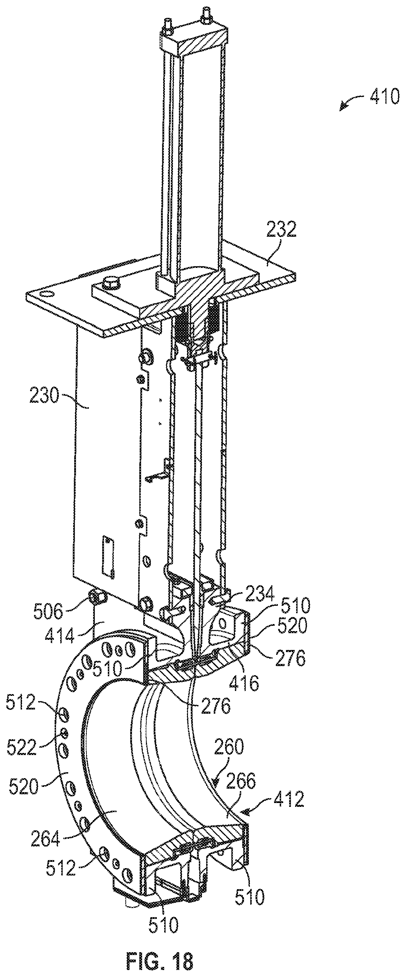

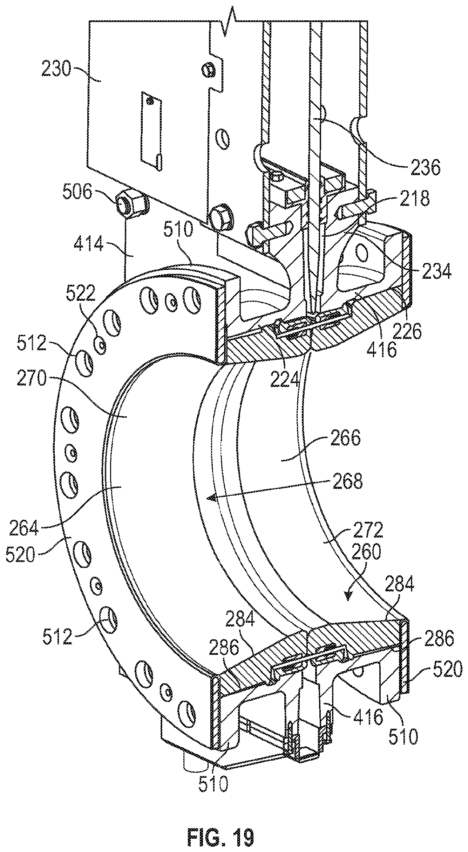

Further, in this embodiment, a load distribution ring 520 may be located in registration with the radial flanges 510 and against the first surface 278 of the first side 276 of each annular member 270, 272, as best seen in FIGS. 18 and 19. The load distribution ring 520 is secured to the radial flange 510 by fasteners 522, such as screws. In all other respects, the description of the structures of the embodiment shown in FIGS. 9-16 are applicable to the structures of the embodiment shown in FIGS. 17-24.

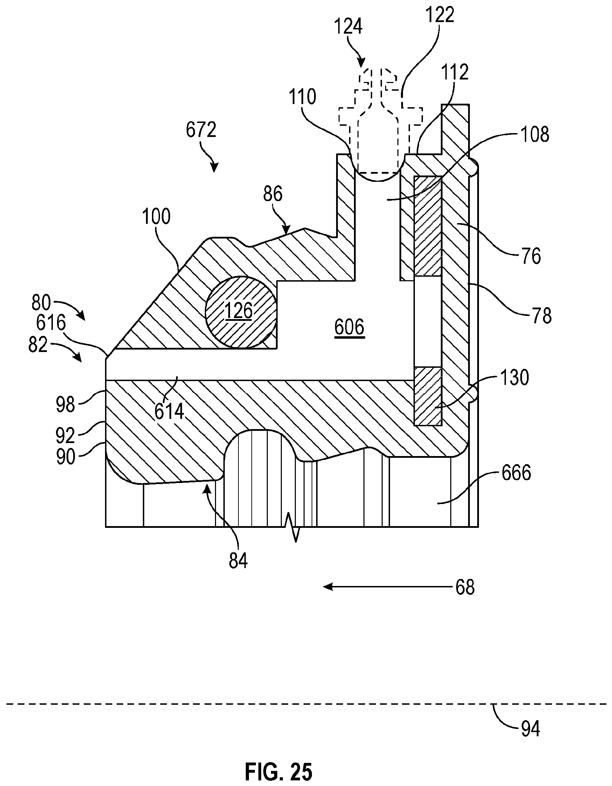

FIG. 25 is a partial view in cross section of a lubricating annular member 672 (similar to annular member 72 shown in FIG. 3) in accordance with an alternative embodiment of the disclosure. The lubricating annular member 672 includes a second annular member body 666, which is configured to provide a lubricating sealing element to deliver a lubricating substance to the gate 36 as it moves through the gate valve 10. The main difference between the lubricating annular member 672 and the lubricating annular member 72 is that in annular member 672 the lubrication channel 606 is in fluid communication with the axial lubrication channel 614 radially inside the reinforcing member 126 (which may comprise a continuous annulus in this embodiment), and the axial lubrication channel 614 extends radially inside the reinforcing member 126 and exits at an opening 616. The opening 616 may be located at one or both (i.e. overlapping) of the contact surface 98 and the annular bevelled portion 100.

Locating the axial lubrication channel 614 radially inside the reinforcing member 126 obviates the need to (i) have an opening through the reinforcing member 126, and (ii) align the axial lubrication channel 614 with that opening.

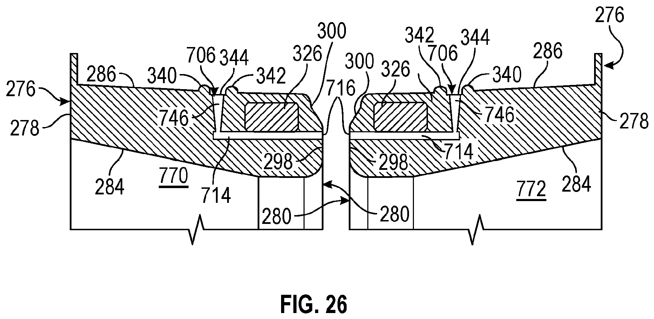

FIG. 26 is a view in elevation of a portion of a first annular member 770 and a second annular member 772 in an alternative embodiment to that of the FIGS. 9 to 14 embodiment, in side-by-side proximity.

The main difference between the lubricating annular members 770, 772 and lubricating annular member 270, 272 is that in annular members 770, 772 the lubrication channel 706 is in fluid communication with the axial lubrication channel 714 radially inside the reinforcing member 326 (which may comprise a continuous annulus in this embodiment), and the axial lubrication channel 714 extends radially inside the reinforcing member 326 and exits at an opening 716. The opening 716 is located on the annular bevelled portion 300 or on both (i.e. overlapping) the contact surface 298 and the annular bevelled portion 300.

In the foregoing description of certain embodiments, specific terminology has been resorted to for the sake of clarity. Terms such as "upper" and "lower" "above" and "below" and the like are used as words of convenience to provide reference points and are not to be construed as limiting terms.

In this specification, the word "comprising" is to be understood in its "open" sense; that is, in the sense of "including", and thus not limited to its "closed" sense, that is, the sense of "consisting only of". A corresponding meaning is to be attributed to the corresponding words "comprise", "comprised" and "comprises" where they appear.

The preceding description is provided in relation to several embodiments which may share common characteristics and features. It is to be understood that one or more features of any one embodiment may be combinable with one or more features of the other embodiments. In addition, any single feature or combination of features in any of the embodiments may constitute additional embodiments. In addition, the embodiments are limited by the appended claims.

### Reference Numerals

Gate valve 10, 210, 410
Valve body 12, 212
First housing side (of valve body) 14, 214
Second housing side (of valve body) 16, 216
Space 18, 218
Flange mounting holes 20, 220
Inner circumferential surfaces (of housing sides) 24, 26; 224, 226;
Interior central opening 28
Gate guard 30, 230
Yoke 32, 232
Upper portion (of valve body) 34, 234
Gate 36, 236
Secondary seal arrangement 40, 240
Slot housing (of secondary seal arrangement) 42
Bolts 44
Slot 46
Secondary seal element 50
Space 52
Outer surfaces (of gate) 54, 56; 254, 256;
Elongated grooves 58
Lubricating sealing arrangement 60, 260
First annular member body 64, 264
Second annular member body 66, 266, 666
Fluid passageway 68, 268
Annular members 70, 72; 270, 272; 672; 770, 772
First side (of annular member body) 76, 276
First surface (of first side) 78, 278
Second side (of annular member body) 80, 280
Second surface (of second side) 82, 282
Inward-facing axial surface 84, 284
Outward-facing axial surface 86, 286
Radially extending portion 90, 290
Annulus 92, 292
Longitudinal axis 94
Contact surface 98, 298
Annular bevelled portion 100, 300
Lubrication channel 106, 306, 606, 706
Radial lubrication channel 108
Opening (in radial channel) 110
Outer circumferential surface 112
Axial lubrication channel 114, 314, 614, 714
Opening (of axial lubrication channel) 116, 316, 616, 716
Outer circumference (of the annular member) 120
Delivery device 122, 322
Nipple device 124
Reinforcing members 126, 326
Valve body port 128, 328
Load distribution ring 130, 330
Annular ribs 340, 342
Opening (in annular channel) 344
Radial channel or inlet 346, 746
Fasteners 348
Peripheries 500, 502
Fasteners 506
Radial flanges 510
Openings (in radial flanges) 512
Load distribution ring 520
Fasteners (for load distribution ring) 522

## Claims

1. A lubricating annular member (70, 270, 770 or 72, 272, 672, 772) for use in a gate valve (10, 210), the annular member (70, 270, 770 or 72, 272, 672, 772) comprising:
a first side (76, 276) providing a first surface (78, 278) oriented to couple with a pipe flange of a pipeline,
a second side (80, 280) providing a second surface (82, 282) oriented for intermittently contacting a valve gate (36, 236),
an inward-facing axial surface (84, 284) extending between the first side (76, 276) and the second side (80, 280) of the annular member (70, 270, 770 or 72, 272, 672, 772), the inward-facing axial surface (84, 284) providing a fluid pathway (68, 268) for passage of a working fluid therethrough,
and an outward-facing axial surface (86, 286) extending between the first side (76, 276) and second side (80, 280) of the annular member (70, 270, 770 or 72, 272, 672, 772), the outward-facing axial surface (86, 286) providing a support surface for registration against an inner circumferential surface (24, 224 or 26, 226) of a valve body (12, 212);
a channel (106, 306) positioned between the inward-facing axial surface (84, 284) and the outward-facing axial surface (86, 286) of the annular member (70, 270, 770 or 72, 272, 672, 772) and positioned for receiving a lubricating substance; and
at least one axial lubrication channel (114, 314, 614, 714) in fluid communication with the channel (106, 306), the at least one axial lubrication channel (114, 314, 614, 714) having an opening (116, 316, 616, 716) at the second side (80, 280) of the annular member (70, 270, 770 or 72, 272, 672, 772); and
wherein the second surface (82, 282) of the second side (80, 280) of the annular member (70, 270, 770 or 72, 272, 672, 772) comprises a radially extending portion (90, 290), defining an annulus (92, 292) and defining a contact surface (98, 298) for intermittently contacting the valve gate (36, 236),
**characterised by** an annular bevelled portion (100, 300) that extends from the radially extending portion (90, 290) to the outward-facing axial surface (86, 286), and wherein the opening (116, 316, 616, 716) of the at least one axial lubrication channel (114, 314, 614, 714) at the second surface (82, 282) is positioned in the annular bevelled portion (100, 300) of the second surface (82, 282).

2. The lubricating annular member according to claim 1, where the channel (306) comprises an open channel formed in the outward-facing axial surface (286) of the annular member (270 or 272).

3. The lubricating annular member according to claim 2, further comprising at least one radial channel (346) having an opening (344) formed at the channel (306), the at least one radial channel (346) being in fluid communication with the at least one axial lubrication channel (314) to provide lubrication between the channel (306) and the at least one axial channel (314).

4. The lubricating annular member according to claim 1, further comprising at least one radial channel (108) formed with an opening (110) at the outward-facing axial surface (86) of the annular member (70, 72) and extending to the channel (106), and being in fluid communication with the channel (106) to introduce the lubricating substance to the channel (106).

5. The lubricating annular member according to any preceding claim,
wherein the at least one axial lubrication channel (114, 314) comprises a plurality of axial lubrication channels (114, 314) distributed about the second surface (82, 282) of the annular member (70, 270 or 72, 272).

6. The lubricating annular member according to any preceding claim,
wherein the at least one axial lubrication channel (114, 314) has a diameter of between 0.2 millimetres and 15 millimetres.

7. The lubricating annular member according to any preceding claim, further comprising a reinforcing member (126) located at, or radially outside, the at least one axial lubrication channel (114, 314).

8. The lubricating annular member according to any preceding claim, further comprising a load distribution ring (130, 330) located proximate the first side (76, 276) of the annular member (70, 270 or 72, 272).

9. A gate valve (10, 210, 410) comprising:
a valve body (12, 212, 412) having a first housing side (14, 214, 414) and a second housing side (16, 216, 416) that is positioned in opposing alignment to the first housing side (14, 214, 414), each of said first housing side (14, 214, 414) and second housing side (16, 216, 416) having an inner circumferential surface (24, 26, 224, 226);
an interior central opening (28) defined by the inner circumferential surface (24, 26, 224, 226) of said first housing side (14, 214, 414) and said second housing side (16, 216, 416);
a pair of lubricating annular members (70, 270 or 72, 272) according to any of claims 1 to 8, each lubricating annular member (70, 270 or 72, 272) being positioned against the interior central opening (28) of the valve body (12, 212, 412) to define a fluid passageway (68, 268) through the gate valve (10, 210, 410) with the first surface (78, 278) of each of the lubricating annular members (70, 270 or 72, 272) oriented to couple with a pipe flange of a pipeline; and
a gate (36, 236) slidably movable from a first position located away from the fluid passageway (68, 268) to a second position located between contact surfaces (98, 298) of the pair of lubricating annular members (70, 270 or 72, 272) and obstructing the fluid passageway (68, 268), the gate (36, 236) being contacted with the lubricating substance delivered by the at least one axial lubrication channel (114, 314) of each of the pair of lubricating annular members (70, 270 or 72, 272) as the gate (36, 236) slidably moves from the first position through abutting contact surfaces (98, 298) of the pair of lubricating annular members (70, 270 or 72, 272) towards the second position, and
wherein the valve body (12, 212, 412) is further structured with at least one valve body port (128, 328) formed in said first housing side (14, 214) and said second housing side (16, 216), the at least one valve body port (128, 328) in each housing side (14, 214, 16, 216) being in fluid communication with the channel (106, 306) of each one of the lubricating annular members (70, 270 or 72, 272) to deliver a lubricant to each said channel (106, 306).

10. The gate valve according to claim 9, further comprising at least one radial lubrication channel (108) in fluid communication with the lubrication channel (106, 306) of each of said first annular member (70, 270) and said second annular member (72, 272).

11. The gate valve according to claim 9 or 10, wherein the contact surfaces (98, 298) of the lubricating annular members (70, 270 or 72, 272) are compressed together during axial compression of the lubricating annular member (70, 270 or 72, 272) by attachment of the gate valve (10, 210, 410) to the flange of the pipeline with the first surface (78, 278) of the lubricating annular members (70, 270 or 72, 272) coupled with the pipe flange.

12. A method of lubricating a gate valve according to any one of claims 9 to 11, the method comprising:
providing the lubricating substance to the channel (106, 306, 606, 706) of each of the two lubricating annular members (70, 270, 770 or 72, 272, 672, 772) through the valve body port (128, 328); and
moving the gate (36, 236) through the valve body (12, 212, 412) and between the contact surfaces (98, 298) of the two lubricating annular members (70, 270, 770 or 72, 272, 672, 772) to deposit a lubricating substance on the contact surfaces (98, 298) and to the gate (36, 236) as the gate (36, 236) moves slidably between the contact surfaces (98, 298) of the two lubricating annular members (70, 270, 770 or 72, 272, 672, 772).

13. The method according to claim 12, further comprising providing each of the two lubricating annular members (70, 270 or 72, 272) with at least one radial lubrication channel (108) in fluid communication with the channel (106, 306) of the two annular members (70, 270 or 72, 272), and providing the lubricating substance to the channel (106, 306) of each of the two annular members (70, 270 or 72, 272) via the at least one radial lubrication channel (108).

14. The method accordingly claim 13, wherein each of the two annular members (70, 270 or 72, 272) is provided with a plurality of radial lubrication channels (108) positioned about a circumference of the respective two annular members (70, 270 or 72, 272) to provide the lubricating substance to the lubricating channel (106, 306) with which the radial lubrication channels (108) are in communication to deliver a lubricating substance evenly about and to the channel (106, 306).

15. The method according to claim 13 or 14, further comprising providing each of the two annular members (70, 270 or 72, 272) with at least one radial lubrication channel (108) in fluid communication with the channel (106, 306) of the annular members (70, 270 or 72, 272), and being positioned to provide the lubricating substance from the channel (106, 306) to the at least one axial lubrication channels (114, 314) of each of the two annular members(70, 270 or 72, 272).

## Patentansprüche

1. Schmierendes ringförmiges Element (70, 270, 770 oder 72, 272, 672, 772) zur Verwendung in einem Absperrschieber (10, 210), wobei das ringförmige Element (70, 270, 770 oder 72, 272, 672, 772) umfasst:
eine erste Seite (76, 276), die eine erste Fläche (78, 278) aufweist, die ausgerichtet ist, um mit einem Rohrflansch einer Rohrleitung zu koppeln,
eine zweite Seite (80, 280), die eine zweite Fläche (82, 282) aufweist, die für intermittierenden Kontakt mit einem Nadelverschluss (36, 236) ausgerichtet ist,
eine nach innen weisende axiale Fläche (84, 284), die sich zwischen der ersten Seite (76, 276) und der zweiten Seite (80, 280) des ringförmigen Elements (70, 270, 770 oder 72, 272, 672, 772) erstreckt, wobei die nach innen weisende axiale Fläche (84, 284) einen Fluidweg (68, 268) für den Durchfluss eines Arbeitsfluids durch diesen bereitstellt,
und eine nach außen weisende axiale Fläche (86, 286), die sich zwischen der ersten Seite (76, 276) und der zweiten Seite (80, 280) des ringförmigen Elements (70, 270, 770 oder 72, 272, 672, 772) erstreckt, wobei die nach außen weisende axiale Fläche (86, 286) eine Stützfläche für eine Ausrichtung gegen eine innere Umfangsfläche (24, 224 oder 26, 226) eines Ventilkörpers (12, 212) bereitstellt;
einen Kanal (106, 306), der zwischen der nach innen weisenden axialen Fläche (84, 284) und der nach außen weisenden axialen Fläche (86, 286) des ringförmigen Elements (70, 270, 770 oder 72, 272, 672, 772) angeordnet ist und für eine Aufnahme eines Schmiermittels angeordnet ist; und
mindestens einen axialen Schmierkanal (114, 314, 614, 714) in Fluidverbindung mit dem Kanal (106, 306), wobei der mindestens eine axiale Schmierkanal (114, 314, 614, 714) eine Öffnung (116, 316, 616, 716) an der zweiten Seite (80, 280) des ringförmigen Elements (70, 270, 770 oder 72, 272, 672, 772) aufweist; und
wobei die zweite Fläche (82, 282) der zweiten Seite (80, 280) des ringförmigen Elements (70, 270, 770 oder 72, 272, 672, 772) einen sich radial erstreckenden Abschnitt (90, 290) umfasst, der einen Ring (92, 292) definiert und eine Kontaktfläche (98, 298) für intermittierenden Kontakt mit dem Nadelverschluss (36, 236) definiert,
**gekennzeichnet durch** einen ringförmigen abgeschrägten Abschnitt (100, 300), der sich von dem sich radial erstreckenden Abschnitt (90, 290) zu der nach außen weisenden axialen Fläche (86, 286) erstreckt, und wobei die Öffnung (116, 316, 616, 716) des mindestens einen axialen Schmierkanals (114, 314, 614, 714) an der zweiten Fläche (82, 282) in dem ringförmigen abgeschrägten Abschnitt (100, 300) der zweiten Fläche (82, 282) angeordnet ist.

2. Schmierendes ringförmiges Element nach Anspruch 1, wobei der Kanal (306) einen offenen Kanal umfasst, der in der nach außen gerichteten axialen Fläche (286) des ringförmigen Elements (270 oder 272) ausgebildet ist.

3. Schmierendes ringförmiges Element nach Anspruch 2, ferner umfassend mindestens einen radialen Kanal (346) mit einer Öffnung (344), die an dem Kanal (306) ausgebildet ist, wobei der mindestens eine radiale Kanal (346) in Fluidverbindung mit dem mindestens einen axialen Schmierkanal (314) steht, um eine Schmierung zwischen dem Kanal (306) und dem mindestens einen axialen Kanal (314) bereitzustellen.

4. Schmierendes ringförmiges Element nach Anspruch 1, ferner umfassend mindestens einen radialen Kanal (108), der mit einer Öffnung (110) an der nach außen weisenden axialen Fläche (86) des ringförmigen Elements (70, 72) ausgebildet ist und sich zu dem Kanal (106) erstreckt und in Fluidverbindung mit dem Kanal (106) steht, um das Schmiermittel in den Kanal (106) einzubringen.

5. Schmierendes ringförmiges Element nach einem der vorhergehenden Ansprüche, wobei der mindestens eine axiale Schmierkanal (114, 314) eine Mehrzahl von axialen Schmierkanälen (114, 314) umfasst, die über die zweite Fläche (82, 282) des ringförmigen Elements (70, 270 oder 72, 272) verteilt sind.

6. Schmierendes ringförmiges Element nach einem der vorhergehenden Ansprüche, wobei der mindestens eine axiale Schmierkanal (114, 314) einen Durchmesser zwischen 0,2 Millimeter und 15 Millimeter aufweist.

7. Schmierendes ringförmiges Element nach einem der vorhergehenden Ansprüche, ferner umfassend ein Verstärkungselement (126), das an dem oder radial außerhalb des mindestens einen axialen Schmierkanals (114, 314) angeordnet ist.

8. Schmierendes ringförmiges Element nach einem der vorhergehenden Ansprüche, ferner umfassend einen Lastverteilungsring (130, 330), der in der Nähe der ersten Seite (76, 276) des ringförmigen Elements (70, 270 oder 72, 272) angeordnet ist.

9. Absperrschieber(10, 210, 410), umfassend:
einen Ventilkörper (12, 212, 412) mit einer ersten Gehäuseseite (14, 214, 414) und einer zweiten Gehäuseseite (16, 216, 416), die in gegenüberliegender Ausrichtung zu der ersten Gehäuseseite (14, 214, 414) angeordnet ist, wobei sowohl die erste Gehäuseseite (14, 214, 414) als auch die zweite Gehäuseseite (16, 216, 416) eine innere Umfangsfläche (24, 26, 224, 226) aufweisen;
eine innere zentrale Öffnung (28), die durch die innere Umfangsfläche (24, 26, 224, 226) der ersten Gehäuseseite (14, 214, 414) und der zweiten Gehäuseseite (16, 216, 416) definiert ist;
ein Paar schmierender ringförmiger Elemente (70, 270 oder 72, 272) nach einem der Ansprüche 1 bis 8, wobei jedes schmierende ringförmige Element (70, 270 oder 72, 272) gegen die innere zentrale Öffnung (28) des Ventilkörpers (12, 212, 412) angeordnet ist, um einen Fluiddurchgang (68, 268) durch das Absperrschieber (10, 210, 410) zu definieren, wobei die erste Fläche (78, 278) jedes der schmierenden ringförmigen Elemente (70, 270 oder 72, 272) ausgerichtet ist, um mit einem Rohrflansch einer Rohrleitung zu koppeln; und
einen Schieber (36, 236), der gleitend von einer ersten Position, die von dem Fluiddurchgang (68, 268) entfernt ist, in eine zweite Position bewegt werden kann, die zwischen den Kontaktflächen (98, 298) des Paares schmierender ringförmiger Elemente (70, 270 oder 72, 272) liegt und den Fluiddurchgang (68, 268) versperrt, wobei der Schieber (36, 236) mit dem Schmiermittel in Kontakt kommt, das durch den mindestens einen axialen Schmierkanal (114, 314) jedes des Paares schmierender ringförmiger Elemente (70, 270 oder 72, 272) zugeführt wird, während sich der Schieber (36, 236) gleitend von der ersten Position durch aneinanderstoßende Kontaktflächen (98, 298) des Paares schmierender ringförmiger Elemente (70, 270 oder 72, 272) zu der zweiten Position bewegt, und
wobei der Ventilkörper (12, 212, 412) ferner mit mindestens einer Ventilkörperöffnung (128, 328) aufgebaut ist, die in der ersten Gehäuseseite (14, 214) und der zweiten Gehäuseseite (16, 216) ausgebildet ist, wobei die mindestens eine Ventilkörperöffnung (128, 328) in jeder Gehäuseseite (14, 214, 16, 216) in Fluidverbindung mit dem Kanal (106, 306) jedes der schmierenden ringförmigen Elemente (70, 270 oder 72, 272) steht, um ein Schmiermittel in jeden dieser Kanäle (106, 306) einzubringen.

10. Absperrschieber nach Anspruch 9, ferner umfassend mindestens einen radialen Schmierkanal (108) in Fluidverbindung mit dem Schmierkanal (106, 306) des ersten ringförmigen Elements (70, 270) und des zweiten ringförmigen Elements (72, 272).

11. Absperrschieber nach Anspruch 9 oder 10, wobei die Kontaktflächen (98, 298) der schmierenden ringförmigen Elemente (70, 270 oder 72, 272) während der axialen Kompression des schmierenden ringförmigen Elements (70, 270 oder 72, 272) durch Befestigung des Absperrschiebers (10, 210, 410) an dem Flansch der Rohrleitung komprimiert werden, wobei die erste Fläche (78, 278) der schmierenden ringförmigen Elemente (70, 270 oder 72, 272) mit dem Rohrflansch gekoppelt ist.

12. Verfahren zum Schmieren eines Absperrschiebers nach einem der Ansprüche 9 bis 11, das Verfahren umfassend:
Einbringen des Schmiermittels in den Kanal (106, 306, 606, 706) jedes der zwei schmierenden ringförmigen Elemente (70, 270, 770 oder 72, 272, 672, 772) durch die Ventilkörperöffnung (128, 328); und
Bewegen des Schiebers (36, 236) durch den Ventilkörper (12, 212, 412) und zwischen den Kontaktflächen (98, 298) der zwei schmierenden ringförmigen Elemente (70, 270, 770 oder 72, 272, 672, 772), um ein Schmiermittel auf den Kontaktflächen (98, 298) und auf den Schieber (36, 236) aufzubringen, während sich der Schieber (36, 236) gleitend zwischen den Kontaktflächen (98, 298) der zwei schmierenden ringförmigen Elemente (70, 270, 770 oder 72, 272, 672, 772) bewegt.

13. Verfahren nach Anspruch 12, ferner umfassend Vorsehen jedes der zwei schmierenden ringförmigen Elemente (70, 270 oder 72, 272) mit mindestens einem radialen Schmierkanal (108) in Fluidverbindung mit dem Kanal (106, 306) der zwei ringförmigen Elemente (70, 270 oder 72, 272), und Einbringen des Schmiermittels in den Kanal (106, 306) jedes der zwei ringförmigen Elemente (70, 270 oder 72, 272) über den mindestens einen radialen Schmierkanal (108).

14. Verfahren nach Anspruch 13, wobei jedes der zwei ringförmigen Elemente (70, 270 oder 72, 272) mit einer Mehrzahl von radialen Schmierkanälen (108) vorgesehen ist, die um einen Umfang der jeweiligen zwei ringförmigen Elemente (70, 270 oder 72, 272) herum angeordnet sind, um das Schmiermittel in den Schmierkanal (106, 306) einzubringen, mit dem die radialen Schmierkanäle (108) in Verbindung stehen, um ein Schmiermittel gleichmäßig um den und in den Kanal (106, 306) zuzuführen.

15. Verfahren nach Anspruch 13 oder 14, ferner umfassend Vorsehen jedes der zwei ringförmigen Elemente (70, 270 oder 72, 272) mit mindestens einem radialen Schmierkanal (108) in Fluidverbindung mit dem Kanal (106, 306) der ringförmigen Elemente (70, 270 oder 72, 272) und angeordnet, um das Schmiermittel von dem Kanal (106, 306) zu dem mindestens einen axialen Schmierkanal (114, 314) jedes der zwei ringförmigen Elemente(70, 270 oder 72, 272) bereitzustellen.

## Revendications

1. Élément annulaire de lubrification (70, 270, 770 ou 72, 272, 672, 772) destiné à être utilisé dans un robinet-vanne (10, 210), l'élément annulaire (70, 270, 770 ou 72, 272, 672, 772) comprenant :
un premier côté (76, 276) fournissant une première surface (78, 278) orientée pour se coupler avec une bride de tuyau d'une canalisation,
un deuxième côté (80, 280) fournissant une deuxième surface (82, 282) orientée pour venir en contact par intermittence avec un robinet-vanne (36, 236),
une surface axiale tournée vers l'intérieur (84, 284) s'étendant entre le premier côté (76, 276) et le deuxième côté (80, 280) de l'élément annulaire (70, 270, 770 ou 72, 272, 672, 772), la surface axiale tournée vers l'intérieur (84, 284) fournissant un passage de fluide (68, 268) pour le passage d'un fluide de travail à travers celui-ci,
et une surface axiale tournée vers l'extérieur (86, 286) s'étendant entre le premier côté (76, 276) et le deuxième côté (80, 280) de l'élément annulaire (70, 270, 770 ou 72, 272, 672, 772), la surface axiale tournée vers l'extérieur (86, 286) fournissant une surface de support pour un alignement contre une surface circonférentielle intérieure (24, 224 ou 26, 226) d'un corps de vanne (12, 212) ;
un canal (106, 306) positionné entre la surface axiale tournée vers l'intérieur (84, 284) et la surface axiale tournée vers l'extérieur (86, 286) de l'élément annulaire (70, 270, 770 ou 72, 272, 672, 772) et positionné pour recevoir une substance lubrifiante ; et
au moins un canal axial de lubrification (114, 314, 614, 714) en communication fluidique avec le canal (106, 306), l'au moins un canal axial de lubrification (114, 314, 614, 714) ayant une ouverture (116, 316, 616, 716) au niveau du deuxième côté (80, 280) de l'élément annulaire (70, 270, 770 ou 72, 272, 672, 772) ; et
dans lequel la deuxième surface (82, 282) du deuxième côté (80, 280) de l'élément annulaire (70, 270, 770 ou 72, 272, 672, 772) comprend une portion s'étendant radialement (90, 290), définissant un anneau (92, 292) et définissant une surface de contact (98, 298) pour entrer en contact par intermittence avec le robinet-vanne (36, 236),
**caractérisé par** une portion annulaire biseautée (100, 300) qui s'étend depuis la portion s'étendant radialement (90, 290) jusqu'à la surface axiale tournée vers l'extérieur (86, 286), et dans lequel l'ouverture (116, 316, 616, 716) de l'au moins un canal axial de lubrification (114, 314, 614, 714) au niveau de la deuxième surface (82, 282) est positionnée dans la portion annulaire biseautée (100, 300) de la deuxième surface (82, 282).

2. Élément annulaire de lubrification selon la revendication 1, dans lequel le canal (306) comprend un canal ouvert formé dans la surface axiale tournée vers l'extérieur (286) de l'élément annulaire (270 ou 272).

3. Élément annulaire de lubrification selon la revendication 2, comprenant en outre au moins un canal radial (346) ayant une ouverture (344) formée au niveau du canal (306), l'au moins un canal radial (346) étant en communication fluidique avec l'au moins un canal axial de lubrification (314) pour fournir une lubrification entre le canal (306) et l'au moins un canal axial (314).

4. Élément annulaire lubrifiant selon la revendication 1, comprenant en outre au moins un canal radial (108) formé avec une ouverture (110) au niveau de la surface axiale tournée vers l'extérieur (86) de l'élément annulaire (70, 72) et s'étendant vers le canal (106), et étant en communication fluidique avec le canal (106) pour introduire la substance lubrifiante dans le canal (106).

5. Élément annulaire de lubrification selon l'une quelconque des revendications précédentes, dans lequel l'au moins un canal axial de lubrification (114, 314) comprend une pluralité de canaux axiaux de lubrification (114, 314) répartis autour de la deuxième surface (82, 282) de l'élément annulaire (70, 270 ou 72, 272).

6. Élément annulaire de lubrification selon l'une quelconque des revendications précédentes, dans lequel l'au moins un canal axial de lubrification (114, 314) a un diamètre d'entre 0,2 millimètre et 15 millimètres.

7. Élément annulaire de lubrification selon l'une quelconque des revendications précédentes, comprenant en outre un élément de renforcement (126) situé au niveau, ou radialement à l'extérieur, de l'au moins un canal axial de lubrification (114, 314).

8. Élément annulaire de lubrification selon l'une quelconque des revendications précédentes, comprenant en outre une bague de répartition de charge (130, 330) située à proximité du premier côté (76, 276) de l'élément annulaire (70, 270 ou 72, 272).

9. Robinet-vanne (10, 210, 410) comprenant :
un corps de vanne (12, 212, 412), ayant un premier côté de boîtier (14, 214, 414) et un deuxième côté de boîtier (16, 216, 416), qui est positionné en alignement opposé au premier côté de boîtier (14, 214, 414), chacun desdits premier côté de boîtier (14, 214, 414) et deuxième côté de boîtier (16, 216, 416) ayant une surface circonférentielle intérieure (24, 26, 224, 226) ;
une ouverture centrale intérieure (28) définie par la surface circonférentielle intérieure (24, 26, 224, 226) dudit premier côté de boîtier (14, 214, 414) et dudit deuxième côté de boîtier (16, 216, 416) ;
une paire d'éléments annulaires de lubrification (70, 270 ou 72, 272) selon l'une quelconque des revendications 1 à 8, chaque élément annulaire de lubrification (70, 270 ou 72, 272) étant positionné contre l'ouverture centrale intérieure (28) du corps de vanne (12, 212, 412) pour définir un passage de fluide (68, 268) à travers le robinet-vanne (10, 210, 410) avec la première surface (78, 278) de chaque élément annulaire de lubrification (70, 270 ou 72, 272) orientée pour se coupler avec une bride de tuyau d'une canalisation ;
une porte (36, 236) mobile de manière coulissante à partir d'une première position située à l'écart du passage de fluide (68, 268) vers une deuxième position située entre les surfaces de contact (98, 298) de la paire d'éléments annulaires de lubrification (70, 270 ou 72, 272) et obstruant le passage de fluide (68, 268), la porte (36, 236) étant en contact avec la substance lubrifiante délivrée par l'au moins un canal de lubrification axial (114, 314) de chacun de la paire d'éléments annulaires de lubrification (70, 270 ou 72, 272) à mesure que la porte (36, 236) se déplace de manière coulissante à partir de la première position à travers des surfaces de contact (98, 298) venant en butée de la paire d'éléments annulaires de lubrification (70, 270 ou 72, 272) vers la deuxième position, et
dans lequel le corps de vanne (12, 212, 412) est en outre structuré avec au moins un orifice de corps de vanne (128, 328) formé dans ledit premier côté de boîtier (14, 214) et ledit deuxième côté de boîtier (16, 216), l'au moins un orifice de corps de vanne (128, 328) dans chaque côté de boîtier (14, 214, 16, 216) étant en communication fluidique avec le canal (106, 306) de chacun des éléments annulaires de lubrification (70, 270 ou 72, 272) pour délivrer un lubrifiant à chacun desdits canaux (106, 306).

10. Robinet-vanne selon la revendication 9, comprenant en outre au moins un canal radial de lubrification (108) en communication fluidique avec le canal de lubrification (106, 306) de chacun dudit premier élément annulaire (70, 270) et dudit deuxième élément annulaire (72, 272).

11. Robinet-vanne selon la revendication 9 ou 10, dans lequel les surfaces de contact (98, 298) des éléments annulaires de lubrification (70, 270 ou 72, 272) sont comprimées ensemble pendant la compression axiale de l'élément annulaire de lubrification (70, 270 ou 72, 272) par la fixation du robinet-vanne (10, 210, 410) à la bride de la canalisation avec la première surface (78, 278) des éléments annulaires de lubrification (70, 270 ou 72, 272) couplée avec la bride de tuyau.

12. Procédé de lubrification d'un robinet-vanne selon l'une quelconque des revendications 9 à 11, le procédé comprenant :
la fourniture de la substance lubrifiante au canal (106, 306, 606, 706) de chacun des deux éléments annulaires lubrifiants (70, 270, 770 ou 72, 272, 672, 772) à travers l'orifice de corps de vanne (128, 328) ; et
le déplacement de la porte (36, 236) à travers le corps de vanne (12, 212, 412) et entre les surfaces de contact (98, 298) des deux éléments annulaires de lubrification (70, 270, 770 ou 72, 272, 672, 772) pour déposer une substance lubrifiante sur les surfaces de contact (98, 298) et sur la porte (36, 236) à mesure que la porte (36, 236) se déplace de manière coulissante entre les surfaces de contact (98, 298) des deux éléments annulaires de lubrification (70, 270, 770 ou 72, 272, 672, 772).

13. Procédé selon la revendication 12, comprenant en outre la fourniture de chacun des deux éléments annulaires de lubrification (70, 270 ou 72, 272) avec au moins un canal radial de lubrification (108) en communication de fluide avec le canal (106, 306) des deux éléments annulaires (70, 270 ou 72, 272), et la fourniture de la substance de lubrification au canal (106, 306) de chacun des deux éléments annulaires (70, 270 ou 72, 272) par l'intermédiaire de l'au moins un canal radial de lubrification (108).

14. Procédé selon la revendication 13, dans lequel chacun des deux éléments annulaires (70, 270 ou 72, 272) est doté d'une pluralité de canaux radiaux de lubrification (108) positionnés autour d'une circonférence des deux éléments annulaires (70, 270 ou 72, 272) respectifs pour fournir la substance lubrifiante au canal de lubrification (106, 306) avec lequel les canaux radiaux de lubrification (108) sont en communication pour délivrer une substance lubrifiante uniforme autour de et vers le canal (106, 306).

15. Procédé selon la revendication 13 ou 14, comprenant en outre la fourniture de chacun des deux éléments annulaires (70, 270 ou 72, 272) avec au moins un canal radial de lubrification (108) en communication de fluide avec le canal (106, 306) des éléments annulaires (70, 270 ou 72, 272), et étant positionnés pour fournir la substance de lubrification au canal (106, 306) vers les au moins un canaux axiaux de lubrification (114, 314) de chacun de deux éléments annulaires(70, 270 ou 72, 272).
